# EUROPEAN PATENT SPECIFICATION

(11) **EP 4 431 708 B1**
(45) Date of publication and mention of the grant of the patent: **13.05.2026**
(21) Application number: 24163575.4
(22) Date of filing: 14.03.2024
(51) Int. Cl.: F01N 1/06, G10K 11/22

(54) **AN ACOUSTIC DEVICE FOR A VEHICLE**
AKUSTISCHE VORRICHTUNG FÜR EIN FAHRZEUG
DISPOSITIF ACOUSTIQUE POUR VÉHICULE

(30) Priority: 15.03.2023 GB 202303800
(43) Date of publication of application: 18.09.2024
(73) Proprietor: McLaren Automotive Limited, Woking, Surrey GU21 4YH (GB)
(72) Inventor: Palmieri, Davide, GU21 4YH Woking (GB); Figuretti, Alessio, GU21 4YH Woking (GB)
(74) Representative: Slingsby Partners LLP

(56) References cited:
- EP-A1- 4 130 445
- US-A1- 2002 157 897
- US-A1- 2007 154 056

## Description

This invention relates to an acoustic device for transmitting engine-generated sound pulses from the engine of a vehicle.

Passive acoustic bypass devices are known to be implemented into modern-day high-performance vehicles, such as sports cars, to improve the acoustic performance of those vehicles. These acoustic devices are configured to transmit sound obtained from gases either entering or existing the engine of the vehicle into an environment that is either external (i.e., outside) or internal (i.e., inside) to the vehicle. The devices typically comprise a hollow chamber configured to receive input gases and a movable diaphragm that bisects the chamber. The diaphragm is configured to transmit sound pulses through the chamber whilst also preventing the transfer of input gases through the chamber.

Existing passive acoustic bypass devices are limited by the levels of static pressure and temperatures that they are able to tolerate. Thus, the input gases for such devices must be obtained from either (i) an input to a vehicle engine, where they have not yet been subjected to combustion processes within the engine itself, or (ii) from a location along the exhaust system of the vehicle that is located between the exhaust outlet and at least one gas treatment component of the exhaust system. These types of input gases are unable to transfer sound pulses that are fully representative of the noise generated during engine combustion processes, as in scenario (i) these gases have not yet been subjected to such processes, and in scenario (ii) the gases have been filtered out by a gas treatment component, diminishing the quality of the sound vibrations that they carry.

EP 4130445 describes a sound bypass device configured to transmit engine-generated sound pulses from an engine to a sound outlet whilst preventing flow of gases to the sound outlet.

US 2002/157897 describes a device for noise configuration in a motor vehicle having a hollow body which is divided into at least two spaces. One space is connected to a gas-carrying part of an internal combustion engine arranged in the motor vehicle, and the other space is coupled acoustically to an interior and an engine space of the motor vehicle or to the space surrounding the motor vehicle. A vibrational element, which extends into both spaces, is arranged within the hollow body.

According to a first aspect there is provided a sound bypass device configured to transmit engine-generated sound pulses from an engine of a vehicle to an auditory environment whilst preventing the flow of gases to the auditory environment, the sound bypass device comprising: a sound inlet configured to receive gases exiting or entering the engine of the vehicle; a sound outlet configured to transmit sound pulses to the auditory environment; a chamber connected to the sound inlet at a first end and to the sound outlet at a second end, the chamber being enclosed between the sound inlet and the sound outlet; and a first membrane located within the chamber, the first membrane being configured to transmit engine-generated sound pulses from the gases whilst preventing the movement of gases through the sound bypass device; wherein the sound outlet is defined by a second membrane extending radially from the second end of the chamber, the second membrane being configured to emit sound pulses from the chamber to the auditory environment.

According to a second aspect there is provided a sound bypass device configured to transmit engine-generated sound pulses from an engine of a vehicle to an auditory environment whilst preventing the flow of gases to the auditory environment, the sound bypass device comprising: a sound inlet configured to receive gases exiting or entering the engine of the vehicle; a sound outlet configured to transmit sound pulses to the auditory environment; a chamber connected to the sound inlet at a first end and to the sound outlet at a second end, the chamber being enclosed between the sound inlet and the sound outlet; and a first membrane located within the chamber, the first membrane being configured to transmit engine-generated sound pulses from the gases whilst preventing the movement of gases through the sound bypass device; wherein the sound outlet is defined by a second membrane extending radially from the second end of the chamber, the second membrane extending outwardly from a central point of the sound outlet, and the second membrane being configured to move in response to sound pulses from the chamber to emit sound pulses from the chamber to the auditory environment.

The first membrane may comprise bellows attached to an internal wall of the chamber.

The first membrane may comprise a corrugated spring attached to an internal wall of the chamber.

The internal wall may be an end wall of the chamber.

The internal wall may be a side wall of the chamber.

The first membrane may be constructed from a sheet of corrugated material.

The first membrane may be composed as a single sheet of material.

The chamber may be defined by a first axis that extends between its first end and its second end, and the second membrane may extend outwardly of the chamber in (i) a radial direction that extends away from the first axis, and (ii) and an axial direction that is coincident with the first axis and extends away from the chamber.

The second membrane may comprise a cross-sectional area that extends perpendicularly to the first axis, the cross-sectional area of the second membrane increasing as it extends away from the chamber.

The second end of the chamber may comprise an orifice, the orifice having a first cross-sectional area, and the second membrane may have a cross-sectional area at its furthest point from the chamber that is greater than the cross-sectional area of the orifice.

The second membrane may be conical in shape.

The chamber may further comprise: a first volume located between the sound inlet and the first membrane; and a second volume located between the sound outlet and the first membrane; wherein the first membrane is configured to prevent the movement of gasses between the first volume from the second volume.

The first volume may have a first end located at the first end of the chamber and a second end that is proximal to the second volume, and the first volume may have a cross-sectional area that is greater at the second end than it is at the first end.

The rate of increase of the cross-sectional area of the first volume may be constant along the length of the first volume.

The second volume may have a cross-sectional area that is consistent along the length of the second volume.

The sound bypass device may further comprise a connecting means for transferring engine-generated sound pulses waves between the first membrane and the second membrane.

The connecting means may be a rod.

The connecting means may be a volume of air comprised within the second volume.

The sound bypass device may further comprise a protective cap located at a centre point of the second membrane, the protective cap being configured to isolate the chamber from the auditory environment.

The protective cap may be coupled to the second membrane by an insulating seal.

The sound bypass device may further comprise: a frame for supporting the second membrane as it extends radially from the chamber; and a suspension mechanism coupling the second membrane to the frame.

The sound inlet may be provided by an input tube.

The sound inlet may be connected to a first location on the exhaust system of a vehicle that is located before a catalytic converter of the vehicle.

The auditory environment may be the cabin of the vehicle.

The sound outlet may be located on the dashboard of a vehicle.

According to a second aspect there is provided a vehicle comprising the sound bypass device of any preceding claim.

The present invention will now be described by way of example with reference to the accompanying drawings. In the drawings:
Figure 1 illustrates a schematic diagram of a vehicle comprising one or more sound bypass device;
Figure 2 illustrates a first configuration of a sound bypass device;
Figure 3 illustrates a second configuration of a sound bypass device;
Figure 4 illustrates a third configuration of a sound bypass device;
Figure 5 illustrates a fourth configuration of a sound bypass device;
Figure 6 illustrates an alternative diagram of a vehicle comprising one or more sound bypass device.

The following description is presented to enable any person skilled in the art to make and use the invention and is provided in the context of a particular application. Various modifications to the disclosed embodiments will be readily apparent to those skilled in the art within the scope of the appended claims.

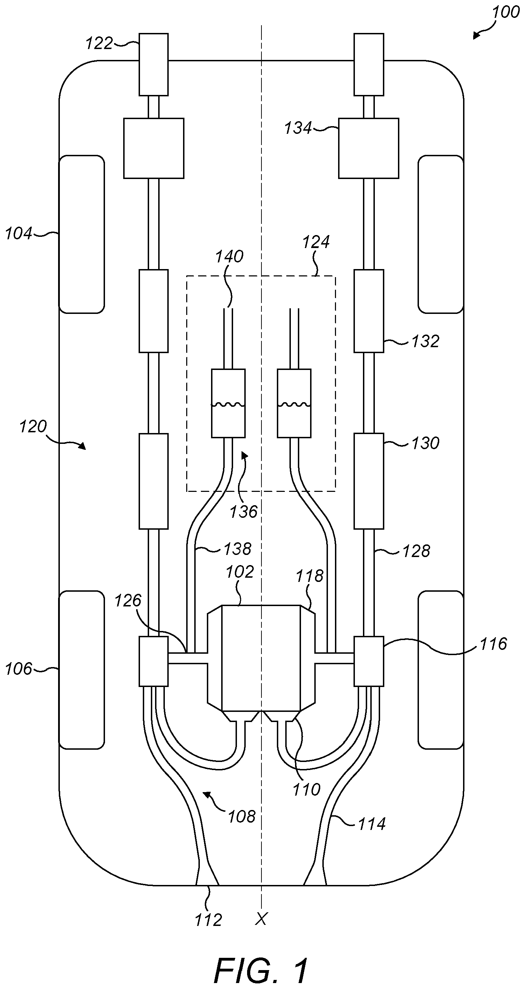

Figure 1 illustrates an example of a vehicle 100. In this example, the vehicle comprises an arrangement of components that is symmetrical about a line X. The line X traverses the length of the vehicle 100 and bisects the width of the vehicle. Thus, the number and arrangement of components on a first side of this line X are the same as the number and arrangement of components on the second side of the line. Each type of component comprised within the vehicle 100 has only been labelled once in figure 1. It would be understood by the skilled person that, as the vehicle is symmetrical about the line X, a component labelled on a first side of the line X corresponds to the same component located on the second side of the line X. The vehicle arrangement illustrated in figure 1 is for exemplary purposes only and it would be understood that this is not limiting to the exact arrangement of components that may be comprised within a vehicle according to the present invention.

The vehicle 100 comprises an internal combustion engine (ICE) 102, which may be coupled to a drive system for the transference of an engine torque to other components of the vehicle. More specifically the torque generated by the combustion engine 102 may be transferred from the combustion engine 102 to moveable elements 104 of the vehicle 100. Alternatively, combustion engine 102 may be coupled to the drive system for the transference of an engine torque to one or more first electrical machines for the generation of drive power. The one or more first electrical machines may be coupled to one or more second electrical machines to receive the drive power and generate motor torques to moveable elements 104 of the vehicle 100. These electrical machines together with the combustion engine 102 may together form a powertrain of the vehicle 100.

The combustion engine 102 of vehicle 100 could be a straight, flat or V-engine having any number of cylinders. The combustion engine 102 may be part of a hybrid drive system for the vehicle. For example, the internal combustion engine may be part of a parallel hybrid drive system whereby one or more electrical machines and the internal combustion engine each generate torques that can be used separately and/or in combination to drive the vehicle. In an alternative example, the internal combustion engine may be part of a series hybrid drive system whereby the internal combustion engine is coupled to one or more first electrical machines which generate power from the engine torque generated by the internal combustion engine. The power generated by the one or more first electrical machines may be transferred to one or more second electrical machines to generate motor torques for driving the vehicle.

The vehicle 100 may comprise a plurality of movable elements 104, 106 for supporting the vehicle 100 on a surface. In the example illustrated in figure 1, the moveable elements are wheels. However, it would be appreciated that the moveable elements may be any alternative components that are capable of supporting the vehicle on a surface and transferring engine torque into a driving force for the vehicle, such as tracks. The moveable elements will from this point forward be referred to as wheels. Some of those wheels may be drive wheels, such as wheels 104. Some wheels may be non-drive wheels, such as wheels 106. It will be appreciated that any configuration of drive 104 and non-drive 106 wheels may be used depending on the particular drive characteristics of the vehicle 100.

The vehicle 100 may comprise an air intake system 108 for providing a supply of air to the combustion engine 102. The air intake system 108 may comprise an intake manifold 110 that is fed an air mixture by at least one intake port. In the example shown in figure 1, the vehicle comprises two intake manifolds 110 that are fed an air mixture by air inlet pipes 114. Air flows into the intake system from one or more intake inlets 112 via the air inlet pipes 114. Generally, the intake inlets 112 are located on the exterior of the vehicle to permit air to flow into the inlets. The flow of air into the intake system may be assisted by one or more induction devices. The induction devices may be one or more turbochargers and/or superchargers. In the example shown in figure 1, a turbocharger 116 is provided for each intake manifold. Each turbocharger 116 is connected between the intake inlet 112 and its respective intake manifold 110.

The flow of air mixture, via the at least one intake inlet 112, into the intake manifold 110 may be regulated by at least one throttle. The intake manifold 110 permits the flow of the air mixture from the intake inlets 112 to the one or more cylinders of the combustion engine 102. The one or more cylinders each house a piston which is caused to move by the ignition of fuel present in the respective cylinder. The pistons are each coupled to a drive an axel of the combustion engine 102 to enable generation of the engine torque by means of the movement of the pistons. The entry and exit of gases into and out of the cylinders are regulated by a plurality of valves for each cylinder. The plurality of valves comprises intake and exhaust valves. Generally, the intake valves regulate the flow of combustion gases into a cylinder and the exhaust valves regulate the flow of exhaust gases out of a cylinder.

The combustion engine 102 may comprise one or more exhaust manifolds 118 which collect the exhaust gases expelled from the cylinders of the combustion engine 102. The exhaust gases are expelled from the cylinders via the plurality of exhaust valves. In the example shown in figure 1, the combustion engine 102 comprises two exhaust manifolds 118. Each exhaust manifold collects exhaust gases expelled from a separate set of cylinders of the combustion engine 102.

The vehicle 100 further comprises an exhaust system 120 which channels the exhaust gases from the exhaust manifold to at least one vehicle exhaust outlet 122. If there is only one exhaust manifold present in the vehicle then the exhaust system 120 may channel the exhaust gases from that exhaust manifold to at least one vehicle exhaust outlet 122. In some vehicles there may be more than one vehicle exhaust outlet 122 to which the exhaust gases are channels from the one exhaust manifold. In the example shown in figure 1, the combustion engine 102 comprises two exhaust manifolds and the exhaust system 120 channels exhaust gases from a first exhaust manifold to at least one first exhaust outlets and from a second exhaust manifold to at least one second exhaust outlets. The exhaust system may combine the flows of exhaust gases from multiple exhaust manifolds along the path from the exhaust manifolds to at least one vehicle exhaust outlet 122.

The exhaust system 120 may comprise one or more exhaust components 116, 130, 132, 134 that acts on the exhaust gases being channelled through the exhaust system. The one or more exhaust components may comprise a turbocharger 116. An exhaust inlet of the turbocharger 116 may be connected to the exhaust manifold 118 by a primary exhaust pipe 126. The exhaust inlet permits exhaust gases to flow into the turbocharger 116. An exhaust outlet of the turbocharger 116 may permit exhaust gases to flow out of the turbocharger 116. The exhaust outlet may be connected to a secondary exhaust pipe 128 to channel the exhaust gases towards the one or more exhaust outlets. The turbocharger assists the flow of air into the intake manifold by obtaining power from the flow of the exhaust gases through the turbocharger. The turbocharger may comprise a first impeller which assists the flow of air into the intake manifold. This first impeller can be powered by the flow of exhaust gases flowing over a second impeller connected to the first impeller. The turbocharger comprises the second impeller. The presence of the turbocharger in the flow path of the exhaust gases from the exhaust manifold to the one or more exhaust outlets alters the engine sounds that are transmitted along the exhaust system to the one or more vehicle exhaust outlets 122. This may mean that the engine sounds from the engine are muffled or otherwise changed. For instance, a turbocharger can add a whining sound to the engine sound being transmitted along the exhaust system.

The one or more exhaust components may alternatively or additionally comprise an exhaust gas treatment device 130, 132, 134. The exhaust system may comprise more than one exhaust gas treatment device for each channel of exhaust gases from the exhaust manifold to exhaust outlet(s). Examples of exhaust gas treatment devices are catalytic convertors, and gasoline particulate filters otherwise known as anti-particulate filters. Each of these devices acts on the exhaust gases in some way to change the constituents of the exhaust gases. The exhaust system may comprise a catalyst followed by an anti-particulate filter in series connected together by secondary exhaust pipes 128. The exhaust system may comprise a catalyst followed by an anti-particulate filter in series connected together by secondary exhaust pipes 128 for each channel between an exhaust manifold 118 and the vehicle exhaust outlet 122.

The vehicle illustrated in figure 1 comprises a turbocharger 116, a catalytic convertor 132 and an anti-particulate filter 134 along a first set of secondary exhaust pipes 128 that channel exhaust gases from a first exhaust manifold to at least one exhaust outlet. These exhaust components also act on the exhaust gases produced by the combustion engine 102 so as to alter the sound of the engine that is transmitted along the exhaust system to the one or more vehicle exhaust outlets 122. The changes to the engine sounds that are produced by the exhaust components and transmitted along the exhaust system can be detrimental to the perception of the vehicle in certain circumstances. For instance, if the vehicle is a high-performance sports car then the exhaust components may serve to alter the sounds emanating from the exhaust outlets such that there is a reduction in the perception that the vehicle is high-performance.

To address this issue, the vehicle is provided with at least one sound bypass device 136. The sound bypass device 136 is configured to transmit the engine generated sounds from the engine of the vehicle to an auditory environment. The sound bypass device 136 comprises a sound input that is fed by a tube 138 that bypasses the exhaust system of the vehicle. The sound bypass device further comprises a sound output 140 located at the auditory environment. The auditory environment may be any environment to which engine sounds may be transmitted. In an example, the auditory environment may be internal to (i.e., inside) the vehicle. In another example, the auditory environment may be external to (i.e., outside) the vehicle. In the example illustrated in figure 1, the auditory environment may be the cabin 124 of the vehicle. The cabin of the vehicle is a compartment of the vehicle within which a user, or driver, of the vehicle can be located. The sound bypass device 136 is configured to transmit engine-generated sounds but not to permit the flow of exhaust gases. In other words, the sound bypass device 136 is configured to prevent the flow of exhaust gases through the sound bypass device 136.

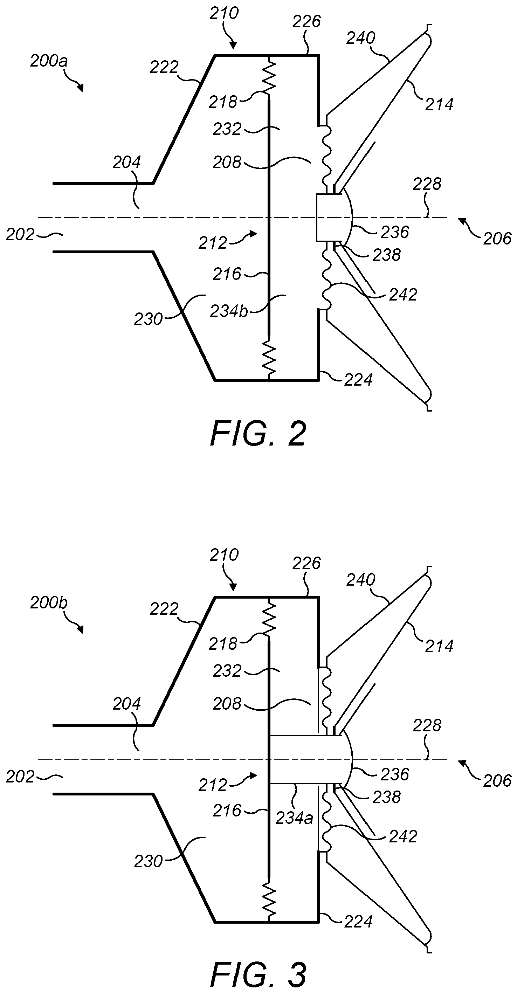

Figures 2-5 illustrate examples of sound bypass devices 200a-d that may be inserted within a vehicle such as vehicle 100. Components of sound bypass devices 200a-d that are common to all of the devices are represented using the same reference numerals. As described above, the sound bypass device is configured to transmit engine-generated sound pulses from an engine of a vehicle to an auditory environment. That is, the sound bypass device is configured to transfer noise from the engine of a vehicle, and to provide that noise to an auditory environment. The auditory environment may be any environment external to the sound bypass device that is able to receive sound pulses. The auditory environment may be either external or internal to the vehicle. The sound bypass device may be described as acoustically permeable, as sound pulses can be transmitted through the device. At the same time, the sound bypass device is configured to prevent the flow of gases from the engine of the vehicle to the auditory environment. That is, the sound bypass device prohibits exhaust gases from the engine from passing to the auditory environment. The sound bypass device may be described as pneumatically impermeable. Thus, the sound bypass device is configured to transfer high quality engine noise to the auditory environment whilst protecting the auditory environment, and any persons in that environment, from the exhaust gases transmitting that noise.

The sound bypass device comprises a sound inlet 202 configured to receive gases exiting or entering the engine of the vehicle. Gases exiting the vehicle are those that are provided to the sound bypass device from a location on the exhaust system of the vehicle. Gases entering the engine of the vehicle are those that are provided to the sound bypass device from a location on the air intake system of the vehicle. The sound inlet 202 may comprise a first orifice 204, or opening, through which exhaust gases can flow into the device. The first orifice 204 may otherwise be referred to as a hole. The sound inlet 202 may be connected to a first location on the exhaust system of the vehicle. The sound inlet 202 may be supplied with exhaust gases by a further vehicle component, such as a pipe or tube. That is, the sound inlet 202 may be connected to a pipe or tube from which exhaust gases (and corresponding sound pulses) are provided to the sound inlet 202. The pipe/tube may correspond to tube 138 of figure 1. The sound inlet 202 may be circular in shape. The sound inlet 202 may itself be a protrusion, or pipe, extending from a portion of the sound bypass device. The sound inlet 202 may define a first end of the sound transmission device.

The sound inlet 202 may be configured to connect to any suitable component of the vehicle so that engine-generated sound pulses can be transferred from the engine to the bypass device. The sound inlet 202 may be connected to a first location on the exhaust system before one of the exhaust components along the flow path of the exhaust gases. That is, the sound inlet 202 is located closer to the exhaust manifold along the flow of the exhaust gases within the exhaust system than that exhaust component. The sound inlet 202 may be connected to the exhaust system before all of the exhaust components. That is, the sound inlet 202 may be connected to the exhaust system between the exhaust manifold and the first exhaust component along the exhaust system in the direction of flow of the exhaust gases. As described in more detail below, the first exhaust component may be a catalytic converter of the vehicle. The sound inlet 202 may alternatively be connected to a location on the air intake for the combustion engine of the vehicle. More specifically, the sound inlet 202 may be connected to the high-pressure plenum and/or ducts that are located on the air intake before the combustion engine.

The sound bypass device further comprises a sound outlet 206 configured to transmit sound pulses to the auditory environment. The sound outlet 206 may comprise a second orifice 208, or opening, permitting sound pulses to exit the sound bypass device. The sound outlet 206 may define a second end of the sound transmission device. The sound outlet 206 will be discussed in further detail below.

The sound bypass device further comprises a chamber 210. The chamber 210 is connected to the sound inlet 202 at a first end and to the sound outlet 206 at a second end. That is, the chamber 210 extends between the sound inlet 202 and the sound outlet 206. The chamber 210 is therefore defined by the sound inlet 202 and the sound outlet 206. The chamber 210 is enclosed between the sound inlet 202 and the sound outlet 206. That is, the chamber 210 comprises internal walls that seal an internal area, or volume, of the chamber 210 between the sound inlet 202 and the sound outlet 206. The internal walls of the chamber 210 may be rigid. That is, the internal walls of the chamber 210 may be resistant to bending. Thus, the chamber 210 may have structural rigidity that is able to withstand the temperatures and pressures of exhaust gases. The internal walls of the chamber 210 may alternatively be flexible (or moveable). The chamber 210 comprises the first orifice 204 of the sound inlet 202 and the second orifice 208 of the sound outlet 206. The chamber 210 may not comprise any orifices except for the first orifice 204 and the second orifice 208. Thus, gases received by the sound inlet 202 are sealed, or confined, within the chamber 210. In other words, gases received by the chamber 210 from the sound inlet 202 are not able to leave the chamber 210 through the sound outlet 206.

The sound bypass device comprises a first membrane 212 located within the chamber 210. The first membrane 212 is configured to transmit engine-generated sound pulses from gases received from the sound inlet 202 whilst preventing the movement of gases through the sound bypass device. That is, the first membrane 212 is configured to conduct engine noise through the sound bypass device. The first membrane 212 is therefore permeable to noise (or acoustically permeable). Also, gases are not able to pass through the first membrane 212 to the sound outlet 206. The first membrane 212 is therefore impermeable to gases (or pneumatically impermeable). The first membrane 212 may bisect, or divide, the chamber 210.

The sound outlet 206 is defined by a second membrane 214 that is configured to emit sound pulses from the chamber 210 to the auditory environment. Thus, the second membrane 214 is acoustically permeable. That is, the second membrane 214 is configured to conduct sound pulses along its surface. As with the first membrane 212, the second membrane 214 may also be pneumatically impermeable. The second membrane 214 extends radially from the second end of the chamber 210. This means that the second membrane 214 spreads outwardly, in at least one plane, in all directions from a central point of the sound outlet 206. In an example, the central point of the second membrane 214 is defined by the second orifice 208. The central point of the second membrane 214 may be the centre point of a circle. Thus, the second membrane 214, when viewed from a direction that faces the sound outlet 206, may have generally circular shape. The second membrane 214 may have any alternative shape, when viewed from a direction that faces the sound outlet 206, that is defined by a centre point from which the membrane expands. The at least one plane on which the second membrane 214 extends may be perpendicular (or at 90 degrees) to the direction of sound vibrations through the chamber 210.

The first membrane 212 may otherwise be referred to as a diaphragm. The first membrane 212 may otherwise be referred to as an input membrane as it receives a sound input, via the sound inlet 202, from exhaust gases. The first membrane 212 may be defined as a thin sheet of material that forms a partition within the chamber 210 of the sound bypass device. In one example, the first membrane 212 may be comprised of a single sheet of material. That is, the first membrane 212 may be comprised of a single, or only one, component. In another example, the first membrane 212 may be comprised of more than one sheet of material. In the case where the first membrane 212 is formed of more than one sheet of material, the more than one sheets of material may be spaced apart from each other. The one or more sheets of material of the first membrane 212 may be one or more flat sheets of material. In some examples, the first membrane 212 may be a rigid membrane. In other examples, the first membrane 212 may be a flexible membrane. Describing the membrane as rigid means that it is resistant to bending. Conversely, describing the membrane as flexible means that that at least one component of the membrane is capable of bending. The first membrane 212 has a spring constant, k, which is a measure of stiffness of the first membrane 212. Where the first membrane 212 is rigid, k may have a high value. Where the second membrane 214 is flexible, k may have a low value. The first membrane 212 may comprise a plurality of corrugations. Thus, the first membrane 212 may be constructed from one or more sheets of corrugated material. A corrugated sheet of material is one that is shaped into a series of parallel ridges and grooves. The corrugated configuration of the first membrane 212 is advantageous as it provides added rigidity, or strength, to the membrane. In one example, the first membrane 212 may be corrugated along the entirety of its width as it extends across the chamber 210. In a second example, the first membrane 212 may be corrugated only at the ends of its width where it attaches to the internal walls of the chamber 210.

The first membrane 212 may be formed of any suitable material. In one example the first membrane 212 may be formed of a metallic material. The formation of the first membrane 212 out of a metallic material provides the first membrane 212 with additional rigidity and means that the membrane is able to withstand the high temperatures associated with gases flowing to or from the engine of the vehicle.

The first membrane 212 is connected across the width of the chamber 210 such that sound pulses travelling from the sound inlet 202 into the chamber 210 drive the motion of the first membrane 212. The first membrane 212 moves in response to changes in pressure generated by the engine of the vehicle. Because the first membrane 212 is configured to move in accordance with sound pulses, the variations in pressure from the sound inlet 202 located on a first side of the first membrane 212 are transferred into a second side of the first membrane 212. Sound pulses travelling from the sound inlet 202 may therefore pass through the first membrane 212 and towards the sound outlet 206.

In order for it to prevent the movement of gases through the sound bypass device, the first membrane 212 must be attached to the internal walls of the chamber 210. That is, the first membrane 212 must be coupled, or connected, to the internal walls of the chamber 210. The attachment, or coupling, of the first membrane 212 to the chamber 210 provides a seal within the chamber 210 which is impermeable to gases. This means that the first membrane 212 provides pneumatic isolation between the sound inlet 202 and the sound outlet 206 of the sound bypass device. The first membrane 212 prevents gases from flowing from the sound inlet 202 to the sound outlet 206 of the device.

In an example where the first membrane 212 is formed of a single sheet of material, the first membrane 212 may be attached directly to the internal walls of the first membrane 212. In this example, the first membrane 212 may be comprised of a first portion 216 in the middle of the membrane, and a second portion 218 that extends around the perimeter of the membrane. As illustrated in figure 2, the first portion 216 of the membrane may be flat, and the second portion 218 of the membrane may be corrugated. Alternatively, the entirety of the first membrane 212 may be corrugated. Providing corrugations around the perimeter of the first membrane 212 allows easy attachment of the first membrane 212 to the internal walls of the chamber 210. The corrugations also provide rigidity at the parts of the membrane that attach to the chamber 210.

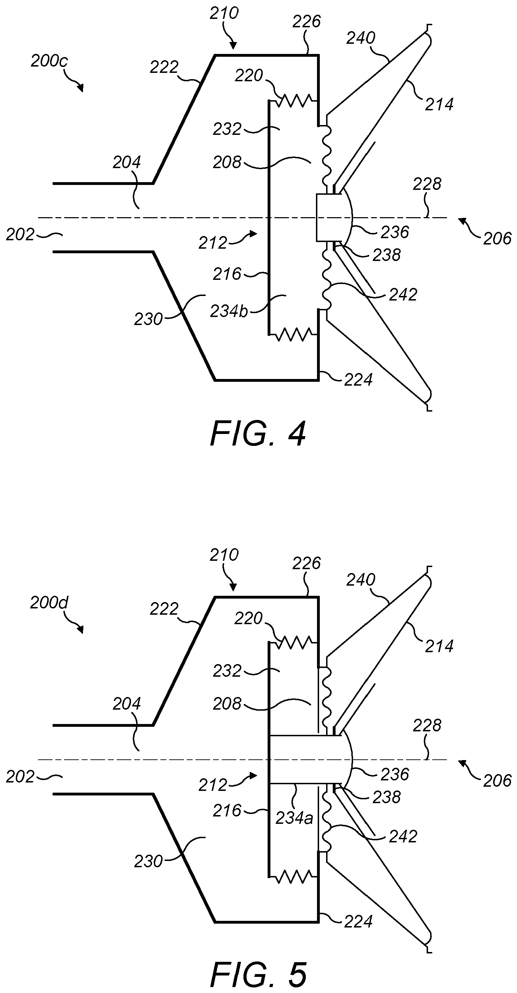

In some examples, the first membrane 212 may further comprise a bellows 220 to which the body of the membrane is attached. A bellows 220 is a device with concertinaed sides to allow it to expand and contract. Thus, where the first membrane 212 comprises bellows 220, the bellows 220 may expand and contract in order to allow the membrane to move in response to changes in pressure generated by gases received from the sound inlet 202. Examples of arrangements of a sound bypass device in which the first membrane 212 comprises bellows 220 are illustrated in figure 4 and 5. In another example, instead of a bellows 220, the first membrane 212 may comprise a corrugated spring configured to attach the body of the membrane to an internal wall of the chamber 210. That is, the first membrane 212 may comprise a spring that is shaped into a series of parallel ridges or grooves. An advantage of the first membrane 212 comprising either bellows 220 or a corrugated spring is that these components allow the first membrane 212 to maintain a level of flexibility with respect to the walls of the chamber 210. This means that the first membrane 212 is resistant to fracture when moved by sound pulses carried by the gases received from the sound inlet 202. The first membrane 212 may comprise any alternative flexible means for attaching the first portion 216 of the membrane to an internal wall of the chamber 210.

The chamber 210 may comprise a plurality of internal walls. Together, the internal walls define the internal volume of the chamber 210. The chamber 210 may comprise two or more end walls. An end wall of the chamber 210 may be defined as a wall that delimits an entrance to, or exit from, the chamber 210. For example, the chamber 210 may comprise a first end wall 222 that is located at the sound inlet 202. The first end wall 222 may comprise the first orifice 204 for the sound inlet 202. The first end wall 222 may extend parallel to, or substantially parallel, to the first membrane 212. The first end wall 222 may be located on a first side of the first membrane 212. The chamber 210 may further comprise a second end wall 224 that is located at the sound outlet 206. The second end wall 224 may comprise the second orifice 208 that defines the sound outlet 206. The second end wall 224 may extend parallel to, or substantially parallel to, to the first membrane 212. The second end wall 224 may be located on a second side of the first membrane 212.

The chamber 210 may further comprise one or more side wall 226s. A side wall 226 of the chamber 210 is a wall that extends between the sound inlet 202 and the sound outlet 206. The side wall 226s of the chamber 210 may therefore extend in the same direction as the path of sound pulses through the chamber 210. The side wall 226s may extend on either side of the first membrane 212. The chamber 210 may comprise a first side wall 226 that extends between the sound inlet 202 and the sound outlet 206. The first side wall 226 may have a length that extends perpendicularly to the second end wall 224. The length of the first side wall 226 may extend perpendicularly to the first membrane 212. In this example, the chamber 210 may comprise more than one side wall 226 (e.g., four side wall 226s). Alternatively, the first side wall 226 may extend circularly around the first membrane 212. That is, the first side wall 226 may be cylindrical in shape. In this example, the chamber 210 may comprise a single internal side wall 226.

In some examples, the internal wall of the chamber 210 to which the bellows 220 of the first membrane 212 attaches may be a side wall 226 of the chamber 210. That is, the bellows 220 of the first membrane 212 may attach to one or more internal walls of the chamber 210 that extend between the two end walls of the chamber 210. The bellows 220 act to provide a seal for the first membrane 212 between the sound inlet 202 and the sound outlet 206. Thus, the bellows 220 may extend around the perimeter of the inside of the chamber 210. In this example, the bellows 220 may be orientated within the chamber 210 so that they are substantially parallel to the first portion 216 of the membrane, when viewed from a plane that extends along the length of the sound bypass device (such as the view illustrated in figure 2). In another example, the internal wall of the chamber 210 to which the bellows 220 of the first membrane 212 attaches may be an end wall of the chamber 210. For example, the end wall may be the second end wall 224 of the chamber 210. In this example, the bellows 220 may extend perpendicularly to the body of the first membrane 212, when viewed from the plane that extends along the length of the sound bypass device.

As described above, the second membrane 214 is configured to emit sound pulses from the chamber 210 to the auditory environment. The second membrane 214 defines the sound outlet 206 of the sound bypass device and extends radially from the second end of the chamber 210. This means that the second membrane 214 spreads outwardly, in at least one plane, from a central point of the sound outlet 206. The second membrane 214 may spread outwardly in two planes from a central point of the sound outlet 206. Imagine that the chamber 210 is defined by a first axis 228 that extends between the first end and its second end. The second membrane 214 may extend outwardly of the chamber 210 in two separate directions. The first direction may be a radial direction, which is away from a centre point of the sound outlet 206 when viewed from a direction that faces the sound outlet 206. The second direction may be axial direction that is coincident with the first axis 228. That is, the second direction may be parallel to, and overlap with, the first axis 228. The second direction extends away from the chamber 210. That is, the second direction extends away from the sound outlet 206.

As has been described above, the second end wall 224 of the chamber 210 may comprise a second orifice 208. The second orifice 208 may be circular in shape. In this example, the second orifice 208 has a diameter that extends across the length of the orifice. The cross-sectional area of the second membrane 214 may extend perpendicularly to the first axis 228. The second membrane 214 may have a cross-sectional area that is parallel to the second end wall 224 of the chamber 210. The cross-sectional area of the second membrane 214 at its furthest point from the chamber 210 may be greater than the cross-sectional area of the second orifice 208. That is, the cross-sectional area of the second membrane 214 may increase as the second membrane 214 extends away from the second orifice 208 along the first axis 228. In other words, the cross-sectional area of the second membrane 214 may increase as the second membrane 214 extends away from the chamber 210. The configuration of the second membrane 214 in this way allows the second membrane 214 to emit sound pulses outwardly of the chamber 210 into the auditory environment.

The second membrane 214 also comprises a width that extends transversely to the first axis 228. The width of the second membrane 214 may define the cross-sectional area of the second membrane 214. The width of the second membrane 214 may be a diameter of the second membrane 214. The width of the second membrane 214 may be perpendicular to the first axis 228. The width of the second membrane 214 may be parallel to the second end wall 224 of the chamber 210. The width of the second membrane 214 at its furthest point from the chamber 210 may be greater than the width of the second orifice 208 (wherein the width of the second orifice 208 is parallel to the width of the second membrane 214). That is, the width of the second membrane 214 may increase as the second membrane 214 extends away from the second orifice 208 along the first axis 228. In other words, the width of the second membrane 214 may increase as the second membrane 214 extends away from the chamber 210.

The second membrane 214 may be conical in shape. In other words, the second membrane 214 may have a cone-shaped profile. A cone-shaped profile is a profile that tapers from a larger circular cross-sectional area (at the end of the second membrane 214 that is furthest from the chamber 210) to narrower circular cross-sectional area (proximal, or next to, the second orifice 208). Alternatively, the second membrane 214 may have a dome-shaped profile. The conical, or dome shaped, profile of the second membrane 214 means that the second membrane 214 acts as a loudspeaker cone. The function of the second membrane 214 is to radiate sound pulses from the chamber 210 out into the auditory environment. Thus, the second membrane 214 may otherwise be referred to as a radiator membrane. The conical or dome-shaped profile of the radiator membrane allows for sound pulses to be emitted radially (i.e., in all directions) out from the second membrane 214, covering a wide area of the auditory environment. As with the first membrane 212, the second membrane 214 may also be referred to as a diaphragm. The second membrane 214 may be as a thin sheet of material that forms a partition between the chamber 210 and the auditory environment. The second membrane 214 may be symmetrical about the first axis 228.

The second membrane 214 may be formed of any suitable material that is capable of transferring sound pulses from inside the chamber 210 into the auditory environment. Suitable materials from which the second membrane 214 may be formed include paper, plastic and metal. In some examples, the material from which the second membrane 214 is formed may have partial rigidity. Partial rigidity allows the second membrane 214 to resist uncontrolled motions. At the same time, the second membrane 214 may have a low mass. The low mass of the membrane minimises the starting force required to cause the membrane to move in response to sound vibrations.

An advantage of configuring the second membrane 214 as described above is that the membrane is provided with a high level of mobility. This high level of mobility results in a high acoustic efficiency. The high acoustic efficiency of the second membrane 214 means that any loss of acoustics from the first input membrane, which may be constructed of a more rigid material, is recovered at the outlet of the sound bypass device.

It has been mentioned above that the first membrane 212 provides a seal between the sound inlet 202 and the sound outlet 206 of the sound bypass device. The first membrane 212 may further be described as separating the chamber 210 into a first volume 230 and a second volume 232. The first volume 230 of the chamber 210 may be located between the sound inlet 202 and the first membrane 212. The second volume 232 of the chamber 210 may be located between the sound outlet 206 and the first membrane 212. Thus, the first membrane 212 is configured to transfer variations in pressure from the first volume 230 to the second volume 232. The first membrane 212 is also connected across chamber 210 (by means of corrugations, bellows 220 or a spring, for example) to prevent movement of gases between the first volume 230 to the second volume 232.

The first volume 230 comprises a first length that may extend parallel the first axis 228. The first length of the first volume 230 may be coincident with the first axis 228. The first length extends between the sound inlet 202 and the first membrane 212. The first volume 230 further comprises a cross-sectional area that is perpendicular to the first length at any given point along the first length. The second volume 232 comprises a second length may extend parallel the first axis 228. The second length of the second volume 232 may be coincident with the first axis 228. The second length extends between the first membrane 212 and the sound outlet 206. In an example, the first length is aligned with the second length along the first axis 228. In other words, the first volume 230 may be aligned with the second volume 232 along the first axis 228. The second volume 232 further comprises a cross-sectional area that is perpendicular to the second length at any given point along the second length.

Thus, the first volume 230 may have a first end located at the first end of the chamber 210 that is defined by the first orifice 204. The first volume 230 may further have a second end that is proximal to the first membrane 212. In other words, the first volume 230 may be delimited by both the first orifice 204 and the first membrane 212. The cross-sectional area of first volume 230 may increase as it extends between the first orifice 204 and the first membrane 212. In other words, the first volume 230 may have a cross-sectional area that is greater at its second end than it is at its first end. The rate of increase of the cross-sectional area of the first volume 230 may be constant along the length of the first volume 230. That is, as the first volume 230 extends between the first orifice 204 and the first membrane 212, its cross-sectional area may increase. The first volume 230 may have a substantially conical shape. That is, the first volume 230 may taper from its second end, at which the first membrane 212 is located, to its first end at the first orifice 204. The configuration of the chamber 210 so that the first volume 230 is shaped in this way may improve the acoustic performance of the sound bypass device. This is because the conical configuration of the first volume 230 minimises sound loss as gases expand whilst they pass through the chamber 210, thereby improving the quality of sound vibrations that are provided to the first membrane 212. Furthermore, the conical configuration of the first volume 230 allows for the frequency of sound vibrations to be tuned as they pass through the first volume 230.

In one example, the first volume 230 may have a cross-sectional area that expands consistently as the first volume 230 extends away from the sound inlet 202. In this example, the first volume 230 is comprised of a single portion of increasing cross-sectional area. In another example, the first volume 230 may comprise more than one portion. More specifically, the first volume 230 may have a first portion with an expanding cross-sectional area, and a second portion for which the cross-sectional area of the first volume 230 is constant. This is illustrated in figure 2. The first portion of the first volume 230 may be proximal (or next to) the sound inlet 202. The second portion of the first volume 230 may be proximal (or next to) the first membrane 212. Thus, the first membrane 212 may intersect the first volume 230 at a portion of the first volume 230 that has a constant cross-sectional area. The arrangement of the first volume 230 with a second portion that intersects the first membrane 212 is that it may allow the first membrane 212 to extend perpendicularly from an internal wall of the chamber 210 that defines the first volume 230.

The second volume 232 may have a cross-sectional area that is consistent along the length of the second volume 232. That is, the second volume 232 may not change in cross-sectional area along its length. The specific dimensions of the second volume 232 may be selected so as to allow the transmission of sound waves through the chamber 210 when the first and second membranes are not rigidly connected together. The volume of second volume 232 may preferably be kept to a minimum so as to maximise the efficiency of this transmission. The cross-sectional area of the second volume 232 may be the same as the cross-sectional area of at least a portion of the first volume 230. The cross-sectional area of the second volume 232 may be the same as the cross-sectional area of the second portion of the first volume 230. An example where the second volume 232 has the same cross-sectional area as the first volume 230 is one where the bellows 220 are parallel to the second end wall 224, as is illustrated in figures 2 and 3. Alternatively, the second volume 232 may alternatively have a cross-sectional area that is smaller than the cross-sectional area of the first volume 230. An example where the second volume 232 has a cross-sectional area that is smaller than the first volume 230 is one where the bellows 220 are perpendicular to the second end wall 224 as is illustrated in figures 4 and 5.

The sound bypass device may further comprise a connecting means for connecting the first membrane 212 to the second membrane 214. The purpose of the connecting means may be to transfer sound pulses from the first membrane 212 to the second membrane 214. Thus, the connecting means is configured to transfer sound pulses from the chamber 210 to the auditory environment. The connecting means may be configured to allow sound vibrations to travel between the first membrane 212 and the second membrane 214. The first membrane 212 is configured to move in accordance with sound pulses received from the sound inlet 202. Thus, by connecting the first membrane 212 to the second membrane 214, the connecting means permits variations in pressure experienced by the first membrane 212 to pass from the first membrane 212 to the second membrane 214. In other words, the connecting means may transfer sound vibrations through the sound bypass device from the first membrane 212 to the second membrane 214.

The connecting means may be any suitable component that is configured to transfer sound pulses from the first membrane 212 to the second membrane 214. In some examples, such as the examples illustrated in figures 3 and 5, the connecting means may be a rod 234a, or shaft. More specifically, the connecting means may be a rigid rod 234a, or a rigid shaft. The configuration of the connecting means as a shaft may optimise the transmission of sound pulses from the first membrane 212 to the second membrane 214. This is because the shaft ensures that sound vibrations emitted from the first membrane 212 cause the second membrane 214 to vibrate, even if the vibrations emitted from the first membrane 212 are not capable of causing the second membrane 214 to vibrate when they are transmitted to the second membrane 214 through the air. The rod 234a may be constructed of any suitable material. In the first example, the rod 234a may be made of plastic. The configuration of the rod 234a from plastic is advantageous as plastic materials may be suitably rigid so as to confer vibrations from the first membrane 212 to the second membrane 214.

In examples, such as the examples illustrated in figures 2 and 4, the connecting means may be a volume of air 234b comprised within the second volume 232. The volume of air 234b may comprise particles of air that are configured to vibrate and thereby transfer sound pulses through the second volume 232 from the first membrane 212 to the second membrane 214. The volume of air 234b may be tuned. That is, the volume of air 234b may be compressed within the second volume 232 to ensure that it is of suitable density to effectively transfer sound pulses from the first membrane 212 to the second membrane 214. In other words, the pressure of the air within the second volume 232 is selected to ensure optimal sound transmittal. The air within the second volume 232 may comprise conventional gases. Alternatively, the term "air" may be used to define any suitable gas that may be inserted within the second volume 232 and is capable of transferring sound pulses.

The sound bypass device may further comprise a protective cap 236 located at a centre point of the second membrane 214. That is, the sound bypass device may comprise a protective cap 236 that passes through the first axis 228. The function of the protective cap 236 may be to isolate the chamber 210 from the auditory environment. That is, the protective cap 236 may pneumatically, and mechanically, isolate the chamber 210 from the auditory environment. This means that the protective cap 236 acts as a seal to prevent material from the auditory environment from entering the chamber 210. The protective cap 236 may otherwise be referred to as a dust cap. The protective cap 236 may comprise a curved dome that extends over the apex of the second membrane 214 so as to provide a seal over the apex of the second membrane 214. The curved dome may be a convex dome. The curved dome may be a concave dome. In addition to preventing material from the auditory environment from entering the chamber 210, the protective cap 236 may additionally contribute to the structural integrity of the second membrane 214. Furthermore, the protective cap 236 may contribute to the acoustic performance of the second membrane 214 by radiating sound pulses into the auditory environment. The protective cap 236 may have a mushroom-shaped design. That is, the protective cap 236 may comprise a first, domed, portion, and a second, stem-like, portion. The stem-like portion of the protective cap 236 may be located within the second volume 232 of the chamber 210. The domed portion of the protective cap 236 may be located within the auditory environment. Thus, the stem-like portion of the protective cap 236 may be used to transfer sound pulses along the protective cap 236 and into the second membrane 214. The protective cap 236 may therefore be used as a transfer mechanism for transferring vibrations from the chamber 210 to the second membrane 214.

The protective cap 236 may be coupled to the second membrane 214 using an insulating seal 238. The insulating seal 238 may complement the sealing function of the protective cap 236. The insulating seal 238 may be constructed from a flexible material, such as rubber. The insulating seal 238 may extend around the perimeter of the protective cap 236. The insulating seal 238 may extend around the third orifice. The insulating seal 238 may couple the walls of the first orifice 204 to the protective cap 236. The insulating seal 238 may couple the step of the first orifice 204 to the protective cap 236.

The connecting means of the sound bypass device may be coupled to the protective cap 236 of the device so as to transmit sound pulses to the protective cap 236. The protective cap 236, in turn, may transmit those sound pulses to the second membrane 214. Thus, where the connecting means is a rod 234a, the rod 234a may be coupled to the protective cap 236. This is illustrated in figures 3 and 5. Thus the rod 234a is coupled at a first end to the first membrane 212, and at a second end to the protective cap 236. This allows for the effective transmission of sound pulses from the first membrane 212 to the protective cap 236 (and therefore the second membrane 214). Where the connecting means is a volume of air 234b comprised within the second volume 232, the volume of air 234b may extend between the first membrane 212 and the protective cap 236. This allows for the effective transmission of sound pulses from the first membrane 212 to the protective cap 236 via the air particles (and therefore effective transmission to the second membrane 214). In examples where the sound bypass device does not comprise a protective cap 236, the connecting means may be connected directly to the second membrane 214.

The sound bypass device may further comprise a frame 240 for supporting the second membrane 214 as it extends radially from the chamber 210. The frame 240 may surround the second membrane 214. The frame 240 may be attached to the second membrane 214 at a distal end. The frame 240 may be attached around the perimeter of the second membrane 214 at a distal end. The distal end of the second membrane 214 is the end of the second membrane 214 this is furthest from the chamber 210. The frame 240 may otherwise be referred to as a basket. The frame 240 may be formed of a rigid material. The purpose of the frame 240 may be to support the second membrane 214, and to prevent significant deformation of the second membrane 214 and other components of the sound bypass device. The frame 240 may be constructed from a suitably rigid material, such as a metal. The frame 240 may also provide an additional function of conducting heat away from the second membrane 214, thereby protecting the acoustic performance of the second membrane 214.

The sound bypass device may also comprise a suspension mechanism 242 coupling the second membrane 214 to the frame 240. The suspension mechanism 242 may be configured to centre the second membrane 214 with respect to the frame 240. The suspension mechanism 242 may be referred to a spider. The suspension system, or spider, may connect to the second membrane 214 to a proximal portion of the frame 240. The proximal portion of the frame 240 is the portion of the frame 240 that is closest to the chamber 210. The suspension mechanism 242 may be made of a corrugated disc. The suspension mechanism 242 may be comprised of a flexible material. Thus, the suspension mechanism 242 is configured deflect in order to allow the second membrane 214 to move, whilst also providing a damping force so as to restore the membrane to a resting position in the absence of vibration. The resting position of the second membrane 214 may centre the second membrane 214 around the first axis 228.

As has been mentioned above, the auditory environment into which sound pulses are emitted by the second membrane 214 may be any environment to which engine sounds may be transmitted. In one example, the auditory environment may be external to the vehicle. That is, the sound bypass device may be located at an external surface of the vehicle. More specifically, the second membrane 214 may be located at an external surface of the vehicle. This allows the second membrane 214 to transmit sound pulses directly outside of the vehicle. The second membrane 214 may be located on an external panel of the body of the vehicle. The external panel may be located at any suitable location on the exterior of the vehicle, such as the door, roof or rear end of the vehicle. The second membrane 214 may also be located on the exhaust tailpipe of the vehicle. In an alternative example, the auditory environment may be internal to the vehicle. In a more specific example, the auditory environment may be the cabin of the vehicle. As mentioned above, the cabin of the vehicle is a compartment of the vehicle within which a user, or driver, of the vehicle can be located. An advantage of the auditory environment being the cabin of the vehicle is that the sound pulses emitted from the sound bypass device may be provided directly to the user of a vehicle. The sound pulses may therefore be able to provide feedback as to the acoustic performance of the vehicle. This is a particularly advantageous feature of vehicles such as sports cars, in which the all-around performance of a vehicle is of great importance to its user. The acoustic feedback may be pleasing to the user. The acoustic feedback may also, in some examples, be used to indicate a problem with the vehicle to the user.

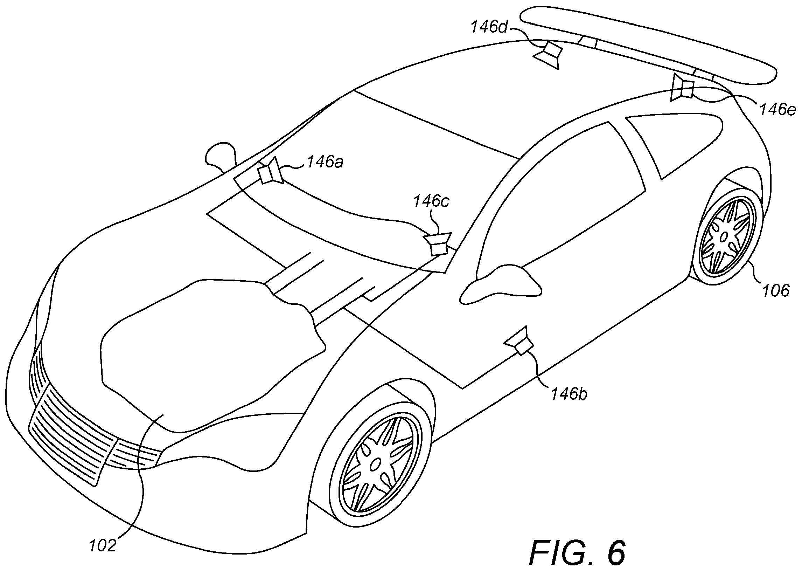

Figure 6 illustrates an example of a vehicle comprising one or more sound bypass devices as described above. The vehicle may comprise more or less bypass devices than the number of bypass devices illustrated in figure 6. The vehicle of figure 6 may be the same as the vehicle in figure 1. The vehicle in figure 6 comprises a combustion engine 102, and one or more sound bypass devices 146a-e that may correspond to any one of devices 136 and 200a-d. The one or more sound bypass devices 146a-e may be mechanically connected to the combustion engine 102. The one or more sound bypass devices, as described above, have a sound inlet 202 that is configured to receive gases exiting or entering the exhaust system of the vehicle. The one or more sound bypass devices may further comprise a sound outlet 206 located internally to the vehicle. The vehicle may comprise one or more sound bypass devices 146a, 146c located on its dashboard. More specifically, the sound outlet 206 of the sound bypass devices 146a, 146c may be located on the surface of the dashboard of the vehicle. The dashboard of a vehicle is a panel that faces the user of the vehicle and that typically contains instruments or controls for the vehicle. The location of the sound bypass device on the dashboard of the vehicle is advantageous as the dashboard provides a solid surface on which to secure the bypass device. Also, because the dashboard is located closest to the user of the vehicle, positioning the bypass device on the dashboard of the cabin also allows noises emitted from the device to be heard clearly by the driver. The vehicle may comprise one or more sound bypass devices with sound outlet 206s located on its dashboard. The sound outlet 206 may be located on the driver's side of the dashboard. The sound outlet 206 may be located on the passenger side of the dashboard. Alternative or additional locations for the sound outlet 206 of a sound bypass device in the interior of the vehicle include on an interior panel of the vehicle (such as an interior door panel 146b or an interior roof panel), or in boot of a vehicle 146d, 146e.

Advantages of the sound bypass devices described herein are provided below. The devices enhance driver experience by relaying exhaust sound directly into the cabin and/or exterior of the vehicle. The use of first and second membranes provides a robust acoustic device that is able to withstand the high temperatures and static pressures of exhaust gases entering the device. This means that the sound inlet 202 to the sound bypass device can be connected to a location of the vehicle exhaust system that is close to the engine manifold, preferably before the catalytic converter of the exhaust system. The catalytic converter is an exhaust component that acts on exhaust gases and may therefore degrade the quality of noises carried by those gases. Thus, the ability to locate the sound inlet 202 before the catalytic converter results in an improvement in the quality of sound that is provided to the sound bypass device, and therefore improves the quality of sound that is emitted by the device.

The ability to position the sound inlet 202 close to the engine manifold, together with the arrangement of components within the sound bypass device, provides excellent acoustic transparency for the device. Acoustic transparency may be defined as the ability of the sound bypass device to accurately represent the real sound that is generated by the engine of the vehicle. The arrangement of components within the sound bypass device may also provide the additional advantage of reducing the overall weight of the device. This is, again, useful for applications within high performance vehicles where weight reduction is desirable for increasing aerodynamic performance.

In view of the foregoing description it will be evident to a person skilled in the art that various modifications may be made within the scope of the invention.

## Claims

1. A sound bypass device (200a; 200b; 200c; 200d) configured to transmit engine-generated sound pulses from an engine (102) of a vehicle (100) to an auditory environment whilst preventing the flow of gases to the auditory environment, the sound bypass device comprising:
a sound inlet (202) configured to receive gases exiting or entering the engine of the vehicle;
a sound outlet (206) configured to transmit sound pulses to the auditory environment;
a chamber (210) connected to the sound inlet at a first end and to the sound outlet at a second end, the chamber being enclosed between the sound inlet and the sound outlet; and
a first membrane (212) located within the chamber, the first membrane being configured to transmit engine-generated sound pulses from the gases whilst preventing the movement of gases through the sound bypass device;
wherein the sound outlet is defined by a second membrane (214) extending radially from the second end of the chamber, and the second membrane being configured to move in response to sound pulses from the chamber to emit sound pulses from the chamber to the auditory environment,
**characterised in that** the second membrane (214) is extending outwardly away from the chamber 210) from a central point of the sound outlet (206).

2. The sound bypass device of claim 1, wherein the first membrane comprises bellows (220) or a corrugated spring attached to an internal wall of the chamber.

3. The sound bypass device of claim 2, wherein the internal wall is an end wall (224) or a side wall (226) of the chamber.

4. The sound bypass device of any preceding claim, wherein the first membrane is constructed from a sheet of corrugated material and/or wherein the first membrane is composed as a single sheet of material.

5. The sound bypass device of any preceding claim, wherein the chamber is defined by a first axis (228) that extends between its first end and its second end, and wherein the second membrane extends outwardly of the chamber in (i) a radial direction that extends away from the first axis, and (ii) and an axial direction that is coincident with the first axis and extends away from the chamber.

6. The sound bypass device of any preceding claim, wherein the second membrane comprises a cross-sectional area that extends perpendicularly to the first axis, the cross-sectional area of the second membrane increasing as it extends away from the chamber.

7. The sound bypass device of any preceding claim, wherein the second end of the chamber comprises an orifice, the orifice having a first cross-sectional area, and wherein the second membrane has a cross-sectional area at its furthest point from the chamber that is greater than the cross-sectional area of the orifice.

8. The sound bypass device of any preceding claim, wherein the second membrane is conical in shape.

9. The sound bypass device of any preceding claim, wherein the chamber further comprises:
a first volume (230) located between the sound inlet and the first membrane; and
a second volume (232) located between the sound outlet and the first membrane;
wherein the first membrane is configured to prevent the movement of gasses between the first volume from the second volume.

10. The sound bypass device of claim 9, wherein the first volume has a first end located at the first end of the chamber and a second end that is proximal to the second volume, and wherein the first volume has a cross-sectional area that is greater at the second end than it is at the first end, and optionally wherein the rate of increase of the cross-sectional area of the first volume is constant along the length of the first volume, and the second volume has a cross-sectional area that is consistent along the length of the second volume.

11. The sound bypass device of any claim 8, further comprising a connecting means (234a, 234b) for transferring engine-generated sound pulses waves between the first membrane and the second membrane.

12. The sound bypass device of claim 11, wherein the connecting means is a rod (243a) or a volume of air (234b) comprised within the second volume.

13. The sound bypass device of any preceding claim, further comprising a protective cap (236) located at a centre point of the second membrane, the protective cap being configured to isolate the chamber from the auditory environment, and optionally wherein the protective cap is coupled to the second membrane by an insulating seal.

14. The sound bypass device of any preceding claim, further comprising:
a frame (240) for supporting the second membrane as it extends radially from the chamber; and
a suspension mechanism (242) coupling the second membrane to the frame.

15. A vehicle (100) comprising the sound bypass device (200a; 200b; 200c; 200d) of any preceding claim.

16. The vehicle of claim 15, the vehicle further comprising an exhaust system and a catalytic converter, wherein the sound inlet is connected to a first location on the exhaust system of the vehicle that is located before a catalytic converter of the vehicle.

17. The vehicle of claim 15 or claim 16, the vehicle further comprising a cabin and, wherein the auditory environment is the cabin of the vehicle, and optionally wherein the vehicle further comprises a dashboard, wherein the sound outlet is located on the dashboard of the vehicle.

## Patentansprüche

1. Schallumleitungsvorrichtung (200a; 200b; 200c; 200d), dazu konfiguriert, motorerzeugte Schallimpulse von einem Motor (102) eines Fahrzeugs (100) an eine Hörumgebung zu übertragen, während die Strömung von Gasen an die Hörumgebung verhindert wird, wobei die Schallumleitungsvorrichtung Folgendes umfasst:
einen Schalleinlass (202), der dazu konfiguriert ist, Gase aufzunehmen, die den Motor des Fahrzeugs verlassen oder in diesen eintreten;
einen Schallauslass (206), der dazu konfiguriert ist, Schallimpulse an die Hörumgebung zu übertragen;
eine Kammer (210), die mit dem Schalleinlass an einem ersten Ende und mit dem Schallauslass an einem zweiten Ende verbunden ist, wobei die Kammer zwischen dem Schalleinlass und dem Schallauslass eingeschlossen ist; und
eine erste Membran (212), die sich innerhalb der Kammer befindet, wobei die erste Membran dazu konfiguriert ist, motorerzeugte Schallimpulse von den Gasen zu übertragen, während die Bewegung von Gasen durch die Schallumleitungsvorrichtung verhindert wird;
wobei der Schallauslass durch eine zweite Membran (214) definiert ist, die sich radial von dem zweiten Ende der Kammer erstreckt, und die zweite Membran dazu konfiguriert ist, sich als Reaktion auf Schallimpulse von der Kammer zu bewegen, um Schallimpulse von der Kammer an die Hörumgebung zu emittieren,
**dadurch gekennzeichnet, dass** sich die zweite Membran (214) von einem zentralen Punkt des Schallauslasses (206) nach außen von der Kammer (210) weg erstreckt.

2. Schallumleitungsvorrichtung nach Anspruch 1, wobei die erste Membran einen Faltenbalg (220) oder eine gewellte Feder umfasst, die an einer Innenwand der Kammer befestigt ist.

3. Schallumleitungsvorrichtung nach Anspruch 2, wobei die Innenwand eine Endwand (224) oder eine Seitenwand (226) der Kammer ist.

4. Schallumleitungsvorrichtung nach einem vorhergehenden Anspruch, wobei die erste Membran aus einer Bahn aus gewelltem Material konstruiert ist und/oder wobei die erste Membran als eine einzelne Bahn aus Material zusammengesetzt ist.

5. Schallumleitungsvorrichtung nach einem vorhergehenden Anspruch, wobei die Kammer durch eine erste Achse (228) definiert ist, die sich zwischen ihrem ersten Ende und ihrem zweiten Ende erstreckt, und wobei sich die zweite Membran in (i) einer radialen Richtung, die sich von der ersten Achse weg erstreckt, und (ii) einer axialen Richtung, die mit der ersten Achse zusammenfällt und sich von der Kammer weg erstreckt, nach außen von der Kammer erstreckt.

6. Schallumleitungsvorrichtung nach einem vorhergehenden Anspruch, wobei die zweite Membran eine Querschnittsfläche umfasst, die sich senkrecht zu der ersten Achse erstreckt, wobei sich die Querschnittsfläche der zweiten Membran in der Erstreckung von der Kammer weg vergrößert.

7. Schallumleitungsvorrichtung nach einem vorhergehenden Anspruch, wobei das zweite Ende der Kammer eine Öffnung umfasst, wobei die Öffnung eine erste Querschnittsfläche aufweist, und wobei die zweite Membran an ihrem am weitesten von der Kammer entfernten Punkt eine Querschnittsfläche aufweist, die größer als die Querschnittsfläche der Öffnung ist.

8. Schallumleitungsvorrichtung nach einem vorhergehenden Anspruch, wobei die zweite Membran eine konische Form aufweist.

9. Schallumleitungsvorrichtung nach einem vorhergehenden Anspruch, wobei die Kammer ferner Folgendes umfasst:
ein erstes Volumen (230), das sich zwischen dem Schalleinlass und der ersten Membran befindet; und
ein zweites Volumen (232), das sich zwischen dem Schallauslass und der ersten Membran befindet;
wobei die erste Membran dazu konfiguriert ist, die Bewegung von Gasen zwischen dem ersten Volumen und dem zweiten Volumen zu verhindern.

10. Schallumleitungsvorrichtung nach Anspruch 9, wobei das erste Volumen ein erstes Ende, das sich an dem ersten Ende der Kammer befindet, und ein zweites Ende, das sich proximal zu dem zweiten Volumen befindet, aufweist und wobei das erste Volumen eine Querschnittsfläche aufweist, die an dem zweiten Ende größer als an dem ersten Ende ist, und optional wobei die Vergrößerungsrate der Querschnittsfläche des ersten Volumens entlang der Länge des ersten Volumens konstant ist und das zweite Volumen eine Querschnittsfläche aufweist, die entlang der Länge des zweiten Volumens gleichbleibend ist.

11. Schallumleitungsvorrichtung nach Anspruch 8, ferner umfassend ein Verbindungsmittel (234a, 234b) zum Übertragen von motorerzeugten Schallimpulswellen zwischen der ersten Membran und der zweiten Membran.

12. Schallumleitungsvorrichtung nach Anspruch 11, wobei das Verbindungsmittel eine Stange (243a) oder ein Luftvolumen (234b) ist, das innerhalb des zweiten Volumens umfasst ist.

13. Schallumleitungsvorrichtung nach einem vorhergehenden Anspruch, ferner umfassend eine Schutzkappe (236), die sich an einem Mittelpunkt der zweiten Membran befindet, wobei die Schutzkappe dazu konfiguriert ist, die Kammer von der Hörumgebung zu isolieren, und wobei die Schutzkappe optional durch eine isolierende Dichtung an die zweite Membran gekoppelt ist.

14. Schallumleitungsvorrichtung nach einem vorhergehenden Anspruch, ferner umfassend:
einen Rahmen (240) zum Stützen der zweiten Membran in der radialen Erstreckung von der Kammer weg; und
einen Aufhängungsmechanismus (242), der die zweite Membran an den Rahmen koppelt.

15. Fahrzeug (100), umfassend die Schallumleitungsvorrichtung (200a; 200b; 200c; 200d) nach einem vorhergehenden Anspruch.

16. Fahrzeug nach Anspruch 15, wobei das Fahrzeug ferner ein Abgassystem und einen Katalysator umfasst, wobei der Schalleinlass mit einer ersten Stelle an dem Abgassystem des Fahrzeugs verbunden ist, die sich vor einem Katalysator des Fahrzeugs befindet.

17. Fahrzeug nach Anspruch 15 oder Anspruch 16, wobei das Fahrzeug ferner einen Fahrgastraum umfasst und wobei die Hörumgebung der Fahrgastraum des Fahrzeugs ist und wobei das Fahrzeug optional ferner ein Armaturenbrett umfasst, wobei sich der Schallauslass auf dem Armaturenbrett des Fahrzeugs befindet.

## Revendications

1. Dispositif de dérivation de son (200a ; 200b ; 200c ; 200d) conçu pour transmettre des impulsions sonores générées par le moteur à partir d'un moteur (102) d'un véhicule (100) à un environnement auditif tout en empêchant l'écoulement de gaz vers l'environnement auditif, le dispositif de dérivation de son comprenant :
une entrée de son (202) conçue pour recevoir des gaz sortant du moteur du véhicule ou entrant dans celui-ci ;
une sortie de son (206) conçue pour transmettre des impulsions sonores à l'environnement auditif ; une chambre (210) raccordée à l'entrée de son au niveau d'une première extrémité et à la sortie de son au niveau d'une seconde extrémité, la chambre étant enfermée entre l'entrée de son et la sortie de son ; et
une première membrane (212) située à l'intérieur de la chambre, la première membrane étant conçue pour transmettre des impulsions sonores générées par le moteur à partir des gaz tout en empêchant le mouvement des gaz à travers le dispositif de dérivation de son ;
ladite sortie de son étant définie par une seconde membrane (214) s'étendant radialement à partir de la seconde extrémité de la chambre, et ladite seconde membrane étant conçue pour se déplacer en réponse à des impulsions sonores provenant de la chambre pour émettre des impulsions sonores provenant de la chambre vers l'environnement auditif, **caractérisé en ce que** la seconde membrane (214) s'étend vers l'extérieur en s'éloignant de la chambre (210) à partir d'un point central de la sortie de son (206).

2. Dispositif de dérivation de son de la revendication 1, ladite première membrane comprenant un soufflet (220) ou un ressort ondulé fixé à une paroi interne de la chambre.

3. Dispositif de dérivation de son de la revendication 2, ladite paroi interne étant une paroi d'extrémité (224) ou une paroi latérale (226) de la chambre.

4. Dispositif de dérivation de son d'une quelconque revendication précédente, ladite première membrane étant construite à partir d'une feuille de matériau ondulé et/ou ladite première membrane étant composée sous forme d'une seule feuille de matériau.

5. Dispositif de dérivation de son d'une quelconque revendication précédente, ladite chambre étant définie par un premier axe (228) qui s'étend entre sa première extrémité et sa seconde extrémité, et ladite seconde membrane s'étendant vers l'extérieur de la chambre dans (i) une direction radiale qui s'étend en s'éloignant du premier axe, et (ii) une direction axiale qui coïncide avec le premier axe et s'étend en s'éloignant de la chambre.

6. Dispositif de dérivation de son d'une quelconque revendication précédente, ladite seconde membrane comprenant une superficie de section transversale qui s'étend perpendiculairement au premier axe, la superficie de section transversale de la seconde membrane augmentant à mesure qu'elle s'étend en s'éloignant de la chambre.

7. Dispositif de dérivation de son d'une quelconque revendication précédente, ladite seconde extrémité de la chambre comprenant un orifice, l'orifice possédant une première superficie de section transversale, et ladite seconde membrane possédant une superficie de section transversale au niveau de son point le plus éloigné de la chambre qui est supérieure à la superficie de section transversale de l'orifice.

8. Dispositif de dérivation de son d'une quelconque revendication précédente, ladite seconde membrane étant de forme conique.

9. Dispositif de dérivation de son d'une quelconque revendication précédente, ladite chambre comprenant en outre :
un premier volume (230) situé entre l'entrée de son et la première membrane ; et
un second volume (232) situé entre la sortie de son et la première membrane ; ladite première membrane étant conçue pour empêcher le mouvement des gaz entre le premier volume et le second volume.

10. Dispositif de dérivation de son de la revendication 9, ledit premier volume possédant une première extrémité située au niveau de la première extrémité de la chambre et une seconde extrémité qui est proximale par rapport au second volume, et ledit premier volume possédant une superficie de section transversale qui est plus grande au niveau de la seconde extrémité qu'elle ne l'est au niveau de la première extrémité, et éventuellement ledit taux d'augmentation de la superficie de section transversale du premier volume étant constant le long de la longueur du premier volume, et ledit second volume possédant une superficie de section transversale qui est uniforme le long de la longueur du second volume.

11. Dispositif de dérivation de son d'une quelconque revendication 8, comprenant en outre un moyen de raccordement (234a, 234b) pour transférer les ondes d'impulsions sonores générées par le moteur entre la première membrane et la seconde membrane.

12. Dispositif de dérivation de son de la revendication 11, ledit moyen de raccordement étant une tige (243a) ou un volume d'air (234b) compris dans le second volume.

13. Dispositif de dérivation de son d'une quelconque revendication précédente, comprenant en outre un capuchon de protection (236) situé au niveau d'un point central de la seconde membrane, le capuchon de protection étant conçu pour isoler la chambre de l'environnement auditif, et éventuellement, ledit capuchon de protection étant couplé à la seconde membrane par un joint d'étanchéité isolant.

14. Dispositif de dérivation de son d'une quelconque revendication précédente, comprenant en outre :
un cadre (240) destiné à supporter la seconde membrane tandis qu'elle s'étend radialement à partir de la chambre ; et un mécanisme de suspension (242) couplant la seconde membrane au cadre.

15. Véhicule (100) comprenant le dispositif de dérivation de son (200a ; 200b ; 200c ; 200d) d'une quelconque revendication précédente.

16. Véhicule de la revendication 15, le véhicule comprenant en outre un système d'échappement et un convertisseur catalytique, ladite entrée de son étant raccordée à un premier emplacement sur le système d'échappement du véhicule qui est situé avant un convertisseur catalytique du véhicule.

17. Véhicule de la revendication 15 ou de la revendication 16, le véhicule comprenant en outre une cabine et, ledit environnement auditif étant la cabine du véhicule, et éventuellement ledit véhicule comprenant en outre un tableau de bord, ladite sortie de son étant située sur le tableau de bord du véhicule.
